**Europäisches Patentamt**

**European Patent Office**

**Office européen des brevets**

(19)

(11) Publication number: **0 116 195**

**A1**

(12) # EUROPEAN PATENT APPLICATION

(21) Application number: **83300700.8**

(22) Date of filing: **11.02.83**

(51) Int. Cl.³: **F 16 C 33/76**

(43) Date of publication of application:
**22.08.84 Bulletin 84/34**

(84) Designated Contracting States:
**DE FR IT SE**

(71) Applicant: **RHP GROUP PLC**
**P.O. Box 20 Pilgrim House High Street**
**Billericay Essex CM12 9XY(GB)**

(71) Applicant: **J.H. FENNER & CO. LIMITED**
**Marfleet**
**Hull North Humberside, HU9 5RA(GB)**

(72) Inventor: **Wood, Ronald Alfred Ernest**
**129 Grange Road**
**Newark-on-Trent Nottingham NG24 4PN(GB)**

(72) Inventor: **Shuttleworth, John**
**35 Reginald Street**
**Colne Lancashire BB8 9QN(GB)**

(74) Representative: **Barnard, Eric Edward et al,**
**BROOKES & MARTIN High Holborn House 52/54 High**
**Holborn**
**London WC1V 6SE(GB)**

(54) **Improvements in sealed bearings.**

(57) An assembly is composed of a rolling element bearing with inner and outer relatively rotatable rings (10,11) with rolling elements (13) therebetween. The ingress of material to the interior of the bearing is prevented by, inter alia, a face-to-face rubbing contact seal (21). The seal (21) has one body or component (20) supported for displacement on a carrier right (15) and a compression spring (29) acts on the component (20) to urge its contact face (28) into sealing contact with the counterface (40) of the seal (21). At least one further seal (30) is provided outside the main seal (21) and likewise at least one barrier (18) is established outside the main seal (21) to further resist the ingress of foreign matter.

Fig.2

EP 0 116 195 A1

0116195

## IMPROVEMENTS IN SEALED BEARINGS

The present invention relates in general to rolling element bearings and, more particularly,, to bearing assemblies incorporating seals.

In certain operating environments conventional bearing seals are not particularly effective. Conventional lip seals, even with multiple lips, are prone to failure after comparatively short periods of operation in such environments. One example of an environment in which these problems are encountered is where the bearing operates in a slurry of water and coal dust and/or in the presence of fire-retardant fluids. Another problem with conventional lip seals is manifest where there is misalignment, eccentricity or out-of-squareness between the inner and outer bearing rings. In such cases, the necessary rubbing contact provided by the lip seals may be ineffective. Yet another problem encountered with conventional lip seals is where the outer ring of a bearing rotates and the inner ring or a mounting shaft is contacted by a lip seal. Due to centrifugal force the lip of the seal can be drawn away from the surface with which it makes sealing contact. Although a tighter rubbing contact can be established to preclude this lifting this tighter contact creates heat and drag.

A general object of the present invention is to provide improved forms of bearing assemblies.

In one aspect the present invention provides a rolling element bearing with inner and outer rings and rolling elements·therebetween in combination with a rubbing contact face-to-face seal for preventing the ingress of material to the interior of the bearing, wherein the faces of the seal are held in contact under controlled pressure by means of a resilient yieldable force. The resiliently yieldable force which biases the contact faces together can be produced by a metallic spring or by a suitable rubber or plastics compound or by a combination thereof.

In preferred embodiments of the invention at least one of the bearing rings can be extended axially to accommodate the face-to-face contact seal and an additional protective seal is provided which is located axially outwardly of the face-to-face contact seal. The additional seal is important in many applications since it acts as a secondary seal to the face-to-face contact seal and prevents the latter from breaking down under adverse operating conditions. The secondary seal can delay the ingress of foreign matter for a sufficient period to permit the face-to-face contact seal to run in. One or more barriers are also useful in assisting the action of the secondary seal to resist the ingress of material.

At least one of the rings or an axial extension thereof can be relieved, e.g. counterbored or recessed, or provided with a groove to accommodate the contact seal or a carrier therefor.

The contact faces of the face-to-face contact seal can be provided in various ways. One of the contact faces may be formed by a carrier for the additional seal or by one of the rings itself. The contact faces can also be formed on respective bodies fitted to the inner and outer rings and/or extensions thereof. One of these bodies can take the form of a washer or at least part of the additional seal. The faces which are in mutual contact to form the face-to-face seal may be flat or curvilinear.

A carrier ring, which may take the form of a metal pressing, can support and/or house at least part of the contact seal. The carrier ring can be fitted to one of the rings or an extension thereof and supports a displaceable body with a surface constituting one of the contact faces of the face-to-face contact seal. A compression spring can then be supported by the carrier ring to act on the body to urge its said surface against the other face of the face-to-face contact seal. Preferably a resilient barrier seal is fitted to the carrier ring or supports the body with said contact surface. The barrier seal may be shaped to inherently transmit spring force to the body. The spring loading can be established by the combination of the compression spring and a deformable resilient diaphragm e.g. part of the barrier seal. The aforementioned body forming one component of the face-to-face contact seal may be urged by the spring force against another body or an end surface of the other ring. Where another body is provided it can extend across the gap between the inner surfaces of the rings or extensions thereof to act as a barrier. Alternatively the carrier ring itself may have a portion which extends across the gap between the inner surfaces of the rings or extensions thereof to act as a barrier. A further rubbing seal can be provided. This further seal may be integral with the barrier seal or separate therefrom. The further seal can contact a surface of one of the rings or a shaft effectively extending the ring. Conveniently a housing encloses the bearing rings to form a compact constructional unit. In this case the further seal can contact part of the housing. The barrier seal can have portions in resilient contact with the housing to take up axial and radial tolerances

Both the housing and the barrier seal can have parts which form barriers resisting the ingress of foreign matter.

The invention may be understood more readily, and various other aspects and features of the invention may become apparent, from consideration of the following description.

Embodiments of the invention will now be described, by way of examples only, with reference to the accompanying drawings, wherein:-

Figs. 1,2,4,5,6,7,8 and 9 are respective sectional views of parts of rolling element bearing assemblies each constructed in accordance with the invention; and

Fig. 3 is a sectional side view of a further rolling element bearing assembly constructed in accordance with the invention and taken on a somewhat smaller scale to that of the other Figures.

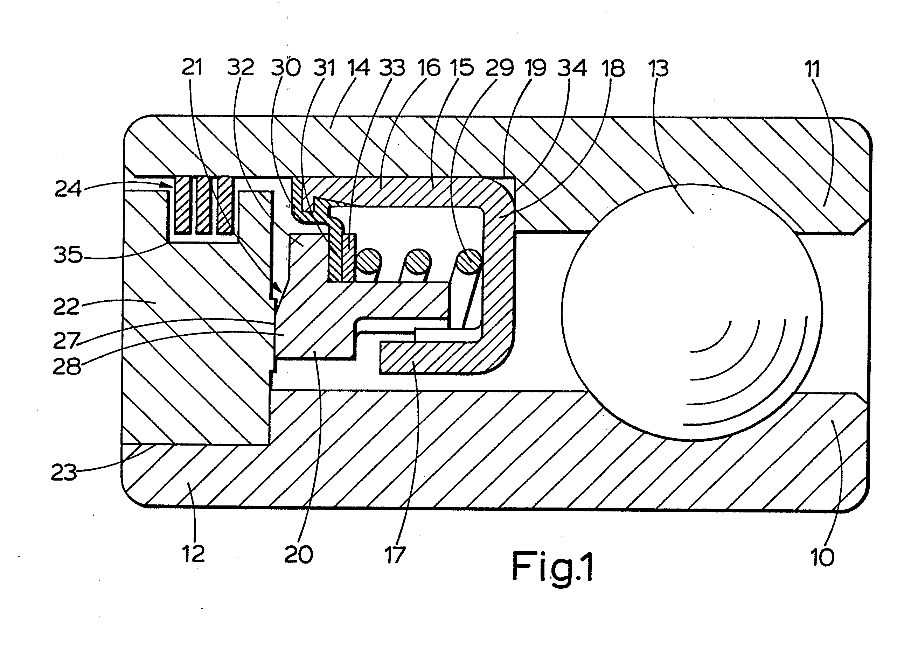

In the accompanying drawings like reference numerals are used throughout to denote like parts. Referring firstly to Fig. 1, the rolling element bearing assembly, as illustrated, is composed of an inner ring 10, an outer ring 11 and a series of rolling elements 13 therebetween. The rolling elements 13 are depicted as balls and the bearing as a radial contact bearing but this is merely by way of example. A cage (not shown in this Fig.) may be used to locate and space the rolling elements. The rings 10,11 have axial extensions denoted 12 and 14, respectively. These extensions 12,14 are integral as illustrated but the extensions 12,14 can be constituted by separately fabricated components affixed to the rings 10,11 if desired. It is assumed, again for examplification, that the outer ring 11 is stationary while the inner ring 10 rotates but these roles can be reversed. The extension 14 of the outer ring 11 supports a shaped annular carrier ring 15. This ring 15 has a generally U-shaped configuration with axial wall portions 16,17 and a radial wall portion 18. The wall portion 16 of the ring 15 seats in a recess 19 formed by relieving the inner face of the extension 14 and is fixed, e.g. as an intereference fit, thereto. The wall portion 18 abuts a shoulder 34 of the recess 19. The ring 15 supports one component 20 of a rubbing-contact face-to-face seal 21. The other component of the seal 21 is designated 22. The first component 20 takes the form of a block of suitable material, such as phenolic resin or carbon. The component or block 20 is supported for sliding in relation to the ring 15 and axially of the bearing but is restrained from rotational movement as for example by keying. The other component 22 of the seal 21 takes the form of another block of suitable compatable material such as sintered metal, stainless steel or a high carbon chrome bearing steel. The component or block 22 seats in a recess 23 in the upper face of the extension 12. The component 22 has a generally rectilinear profile with a raised projection 27 on its inner face in face-to-face contact with a similar projection 28 of the component 20. A compression spring 29 is disposed within a space defined by the ring 15 urges the component 20 outwardly towards the component 22 to maintain the projections 27, 28 together in face-to-face sealing contact. A resilient flexible barrier seal 30 is fitted to the end of the wall portion 16 of the ring 15. This seal 30 has a region 31 sandwiched between a flange 32 of the block 20 and a washer 33. The spring 29 bears on the wall portion 18 of the ring 15 and transmits thrust force to the block 20 through the washer 33, the resilient region 31 cf the seal 30 and the flange 32 thereof. The block or component 22 of the seal 21 itself extends across the gap between the extensions 12, 14 to act also as a barrier. The block 22 terminates closely adjacent the inner surface of the extension 14 and a further seal 24 is disposed between the block 22 and the inner surface of the extension 14. The seal 24 as depicted is a triple-element, non-contacting labyrinth type seal disposed within a groove 35 in the block 22. A rubbing-contact lip seal can also be used as the further seal 24.

The ingress of foreign material, fluid or otherwise, into the bearing rolling surfaces is reliably prevented by the barrier constituted by the block 22 itself in combination with the seals 24, 21.

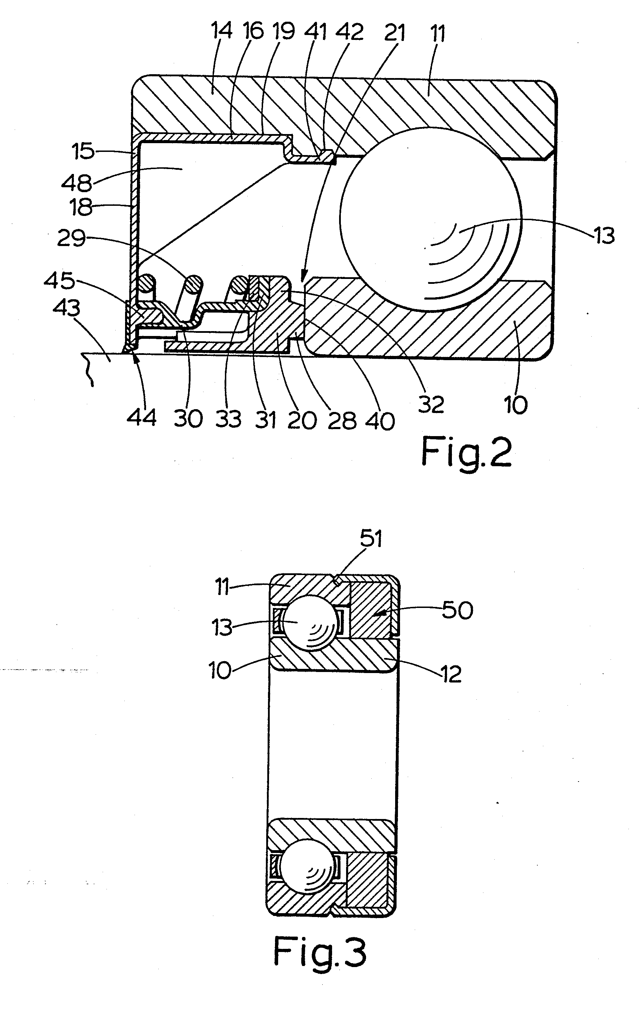

The bearing depicted in Figure 2, only has the outer ring 11 extended and the inner ring 10 locates on a rotatable shaft 43 effectively forming a continuation or extension of the ring 10. The rubbing contact face-to-face seal 21 is established between the block 20 and the radial end face 40 of the inner ring 10 in this embodiment. The block 22 is thus omitted and its function as the barrier is taken over by a modified form of the carrier ring 15. The carrier ring 15 in Figure 2, has a more or less L-shaped profile with a main axial wall portion 16 provided at its free end with a re-entrant lug 41 fitted into a groove 42 in the inner surface of the ring 11. The main radial wall portion 18 of the carrier ring 15 has an outer face more or less flush with the outer face of the extension 14 and terminates close to the periphery of the shaft 43. A lip seal 44 is mounted at the lower end of the ring wall portion 18 to contact the shaft 43. Stiffening webs 48 extend between the wall portions 16, 18 of the ring 15. The wall portion 18 has an inwardly-projecting flange 45 which serves to mount the seal 30.

In Figure 3 the face seal unit is shown diagram-metrically at 50. In this assembly the inner ring 10 is extended and the carrier ring 15 is fitted to a recess 51 in the outer periphery of the ring 11 and is preferably snap-fitted or rolled or peened thereto. The face-to face seal 21 is again created by a pair of bodies 20, 22 similar to Figure 1 but the carrier ring 15 has a radial external wall portion which forms a barrier and carries the further seal 44 in the manner of Fig. 2.
The seal 44 contacts the extended inner ring 10 instead
of the shaft.

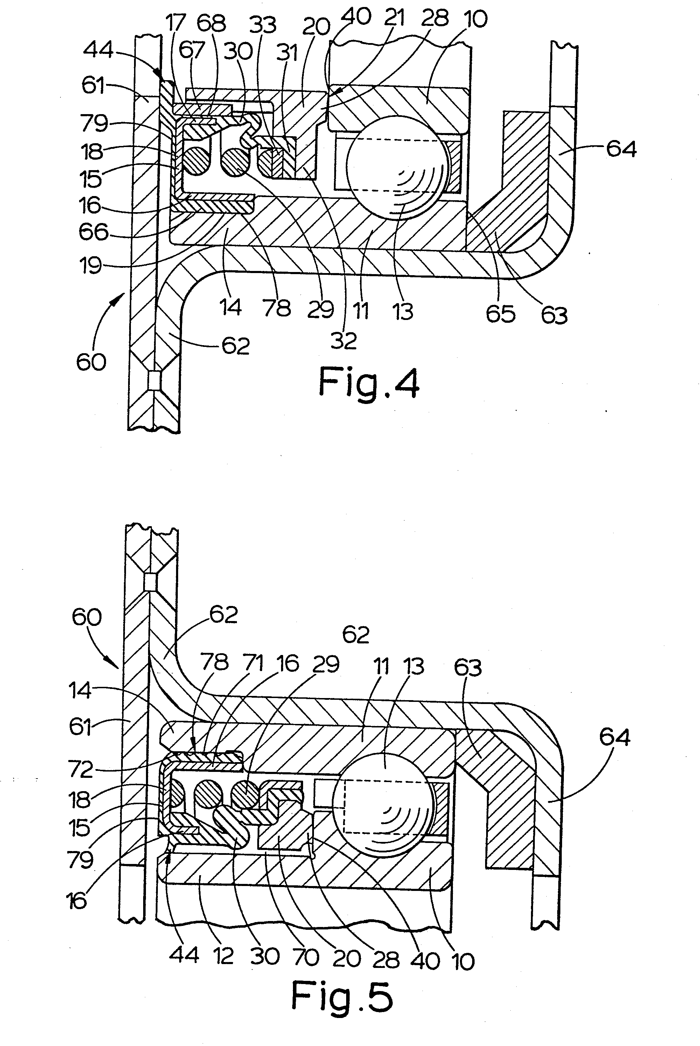

Fig. 4 depicts part of another assembly constructed
in accordance with the invention. In this assembly, the
bearing rings are enclosed by a housing 60 to form a
compact convenient unit mountable onto a shaft (not shown).
The housing 60 is composed of an apertured end plate or
disc 61 acting as an outer barrier and a shaped cup-like
pressing 62 fixed thereto as by welding, riveting or screw
connectors. The pressing 62 locates with the stationary
outer ring 11 and a grease spacer 63 is positioned between a
flange 64 of the pressing 62 and an end face 65 of the
ring 11. The spacer 63 can be made from moulded plastics.
The face-to-face contact seal 21 is established between the
block 20 and an end face 40 of the inner ring 10. The
flexible barrier seal 30 takes a somewhat different shape to
that of the previously-described embodiments and incorporates
an integral lip seal 44 which contacts the shaft (not shown).
This seal portion 44 also establishes a stationary seal
between the housing end plate 61 and the bearing assembly.
The carrier ring 15 for the seal 30 can be moulded with
the seal 30 and its axial portion 16 seats with a portion 66
of the seal 30 in the recess 19 in the inner ring extension 14
thereby to form a further secondary seal 78. A secondary barrier is created by part 79 of the seal 30 and the corresponding portion 18 of the ring 15. A further separate ring 67 slidably supports the block 20 on the ring 15 and a part 68 of the seal 30 is trapped between the ring 67 and the portion 17 of the carrier ring 15.

Fig. 5 depicts part of another assembly constructed in accordance with the invention which is enclosed by a housing 60 in the manner of Fig. 4. In contrast to Fig. 4, both rings 10, 11 are extended (14,12) and the block 20 makes contact with an end face 40 of the inner ring 10 formed as a shoulder of a recess 70 therein. The block 20 is not slidably located but is held solely by the shaped seal 30. The spring 29 which acts to urge the block 20 against the end face 40 to maintain the face-to-face contact seal 21 acts directly on the block 20 and is assisted by the resilience of the seal 30. The seal 30 is again formed with an integral lip seal 44 but this contacts the inner surface of the extension 12 of the inner ring 10 instead of the shaft. The seal 30 is also provided with ribbed axial portion 71 sandwiched between the axial portion 16 of the ring 15 and a recessed region 72 of the outer bearing ring 11 to form the further secondary seal 78. The external part of the seal 30 thus acts again as a pair of secondary seals (44,78) and, with the ring portion 18, as a secondary barrier.

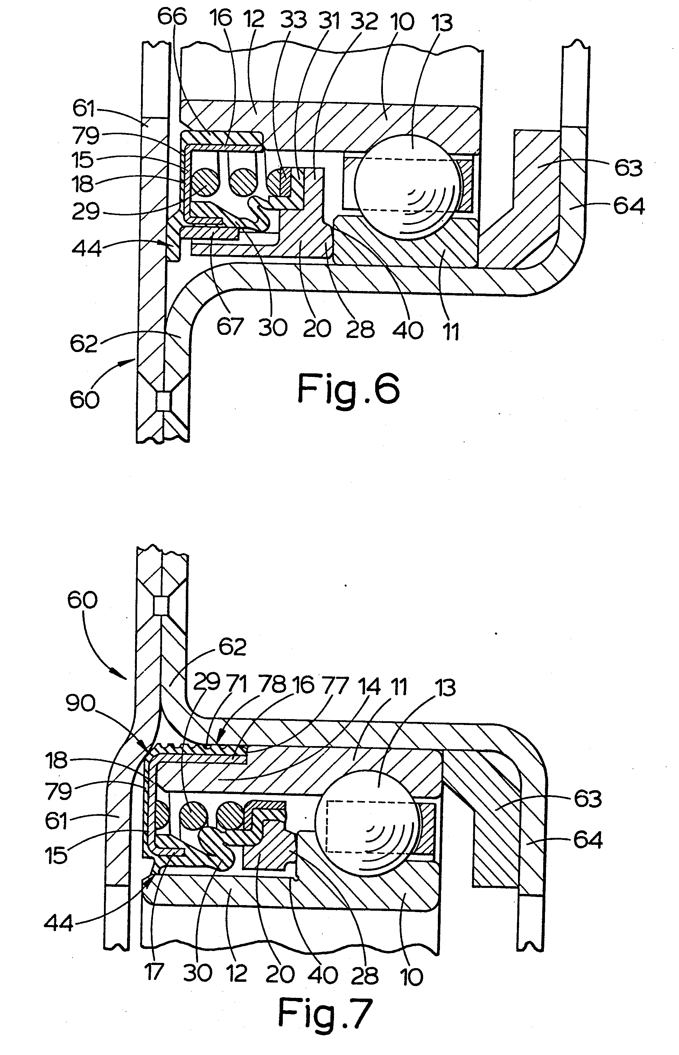

Fig. 6 depicts part of another assembly similar to Fig. 4 but with the block 20 contacting the end face 40 of the outer ring 11 and the carrier ring 15 supported by the extension 12 of the inner ring 10. In this assembly the lip seal 44 contacts the inner face of the end plate 61. The seal 30 again has a portion 66 which seats with the axial portion 16 of the ring 15 in the recess 72 in the inner ring extension 12. Thus the two secondary seals 44, 78 and the secondary barrier (79, 18) are again established.

Fig. 7 depicts part of a further assembly similar to Fig. 5 but in this construction the ribbed portion 71 of the seal fits in an external recess 77 of the outer ring 11 and is sandwiched between the axial portion 16 of the ring 15 and the pressing 62 to seal the interior of the pressing 62. In this assembly the end plate 61 also contacts the seal 30 over a portion 90 to locate the outer ring 11 within the housing 60. Three secondary seals 78,90 and 44 are thus established as well as the primary and secondary barriers 61,18,78. The resilience of the seal 30 over the portion 90 in angular contact with the end plate 61 takes up axial tolerances while the ribbed portion 71 of the seal 30 takes up radial tolerances.

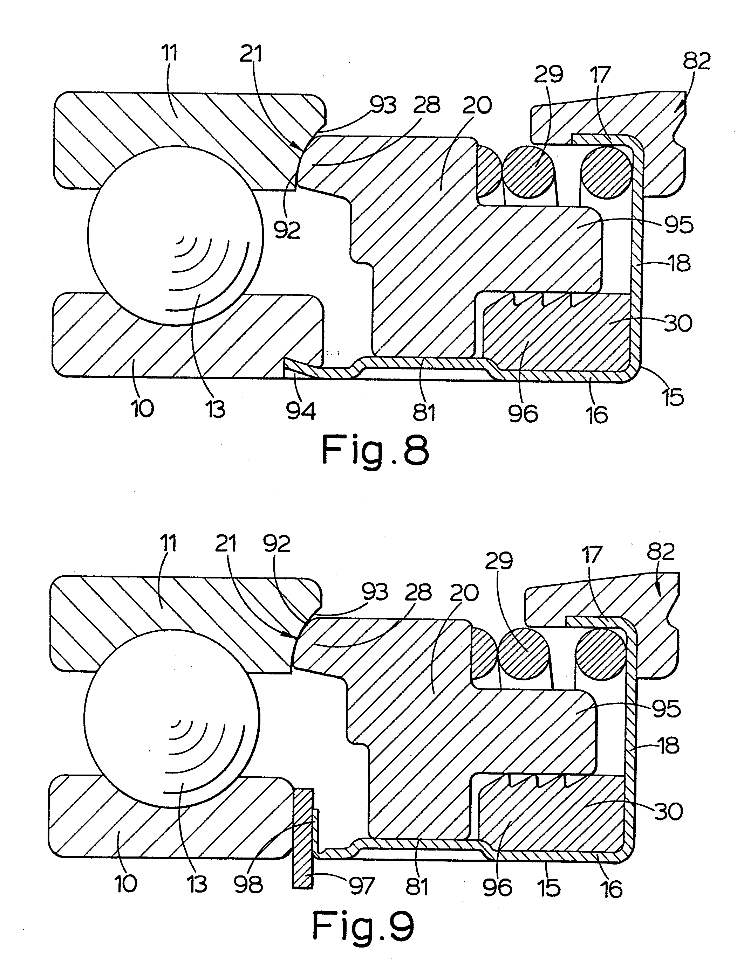

In the assemblies depicted in Figures 8 and 9, the rubbing contact face-to-face seal 21 is established between curvilinear surfaces rather than flat surfaces as

0116195

in the previously-described arrangements.  The assembly

shown  in  Figure 8 thus has the seal 21 established between a convex surface 92 of the projection 28 of the block 20 and a concave surface 93 on the side of the outer ring 14.  The ring 14 is not extended in this illustrated embodiment but, if desired, the ring 14 can be extended in the manner of the previously-described embodiments.  The surface 93 also need not be formed directly on the ring 14.  Instead a component providing the surface 93 can be fitted to the ring 14.  As in the other constructions the spring 29 located by the carrier ring 15 urges the surfaces 92, 93 into sealing contact.  The surfaces 92, 93 may have a different radius of curvature as shown to aid running in and to provide self-alignment between the block 20 and the ring 11.  The carrier ring 15 is fitted to the inner ring 10 as at 94 and the block 20 slidably locates with the ring 15 as at 81.   Means, such as keying,

prevents rotation  of of the block 20.  The seal 30 is establishe

between a grooved block 96 fitted to the ring 15 and a projection 95 of the block 20.  The block 96 is made from a suitable moulded compliant material.  Normally the assembly would be contained in a housing.  A further seal 82 is moulded or attached to the ring 15 and forms a barrier between the housing (not shown) for the assembly and the remainder of the assembly.

The assembly shown in Figure 9 only differs from that shown in Figure 8 in that the carrier ring 15 is not fixed to the inner bearing ring 10. Instead a washer 97 is mounted on a shaft (not shown) and locates between the bearing ring 10 and a flange 98 of the carrier ring 15.

The washer 97 provides a convenient stop for the ring 15 during assembly and enables the initial spring loading to be pre-determined.

In all the embodiments of the invention illustrated in the accompanying drawings, it is possible to invert the arrangement so that the inner ring becomes the outer ring.

-1-

CLAIMS

1.      An assembly comprising a rolling element bearing
with inner and outer rings (10,11) and rolling elements
(13) therebetween in combination with a rubbing contact
face-to-face seal (21) for preventing the ingress of
material to the interior of the bearing; characterised in
that the faces of the seal (21) are held in contact
under controlled pressure by means of a resilient
yieldable force.

2.      An assembly according to claim 1 further
characterised in that one of the contact faces of the
rubbing contact seal (21) is formed on a displaceable
body (20) and the other of the contact faces is
constituted by a surface (40) of one of the rings
(10,11).

3.      An assembly according to claim 1 or 2 further
characterised in that the contact faces of said rubbing
contact seal (21) are flat (27,28,40).

4.      An assembly according to claim 1 or 2, further
characterised in that the contact faces of said rubbing
contact seal (21) are curvilinear (92,93).

5.      An assembly according to any one of claims 1 to
4, and further characterised by at least one further
seal (24,44,30,78,82,90) or barrier (22,18) external to
the rubbing contact seal 21.

6.      An assembly according to any one of claims 1 to
5 further characterised in that carrier means (15) is
fitted to one of the rings (10,11) or an extension thereof,
the carrier means (15) supports a displaceable body (20)
with a surface constituting one of the contact faces of
the rubbing contact seal (21) and a compression spring
(24) acts on the body (20) to urge its said surface
against the other face of the rubbing contact seal (21).

7.      An assembly according to claim 6 further characterised in that the carrier means (15) has a portion (18) which extends across the gap between the inner surfaces of the rings (10,11) or extension (12,14) thereof to act as a barrier.

8.      An assembly according to claim 4, further characterised in that one of the curvilinear faces is a convex face (92) of a spring-loaded block (20) and the other of said curvilinear faces is a concave face (93) of one of the bearing rings (11) or of a component fitted thereto.

9.      An assembly comprising a rolling-element bearing with inner and outer rings (10,11) and rolling elements (13) therebetween in combination with a rubbing contact face-to-face seal (21); characterised in that carrier means (15) is fitted to one of the rings (10), a sealing component (20) is supported by the carrier means (15) for displacement, a compression spring (29) urges the component (20) against the other of the rings (11) to form said rubbing contact seal (21) and an additional barrier (18) and seals (24,44,30,78,82,90) are provided external to the rubbing contact seal (21) relative to the interior of the bearing.

10.      An assembly according to any one of the preceding claims and further characterised by a housing (60) enclosing the bearing rings (10,11).

Fig.1

0116195

Fig.2

Fig.3

0116195

Fig.4

Fig.5

0116195

Fig.6

Fig.7

Fig.8

Fig.9

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-C- 331 946 (ATLAS) <br><br> * Whole document * <br><br> --- | 1,2,3, 5,6,7, 9 | F 16 C 33/76 |
| X | FR-A-1 161 938 (GELENKWELLENBAU) <br><br> * Column 1, figure 1 * <br><br> --- | 1,2,3, 5,6,7, 9 | |
| X | GB-A- 567 781 (STEVENSON) <br><br> * Whole document * <br><br> --- | 1,2,3, 6,9 | |
| X | US-A-2 498 739 (MAGNESEN) <br><br> * Column 4, line 61 - column 5, line 63; figure 3 * <br><br> --- | 1,2,3, 5,6,7, 9,10 | |
| A | DE-A-2 434 043 (GOETZE) <br><br> * Page 4; figure 2 * <br><br> --- | 1,2,3, 10 | TECHNICAL FIELDS SEARCHED (Int. Cl. 3) <br><br> F 16 C <br> F 16 J |
| A | US-A-3 245 735 (SIKORA) <br> * Column 5, lines 64-67; figure 15 * <br><br> --- | 4,8 | |
| A | GB-A- 855 448 (BROCKWAY) <br><br> --- -/- | | |

The present search report has been drawn up for all claims

| Place of search | Date of completion of the search | Examiner |
|---|---|---|
| THE HAGUE | 29-07-1983 | ORTHLIEB CH.E. |

European Patent
Office

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A- 548 051 (MURRAY) | | |
| A | US-A-2 189 197 (CERNY) | | |
| A | GB-A- 482 920 (GARDNER) | | |
| A | GB-A- 531 930 (GOFF) | | |

TECHNICAL FIELDS
SEARCHED (Int. Cl. ³)

The present search report has been drawn up for all claims

| Place of search | Date of completion of the search | Examiner |
|---|---|---|
| THE HAGUE | 29-07-1983 | ORTHLIEB CH.E. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ---
& : member of the same patent family, corresponding
    document

EPO Form 1503. 03.82